# EUROPEAN PATENT SPECIFICATION

(11) **EP 2 994 916 B1**
(45) Date of publication and mention of the grant of the patent: **14.03.2018**
(21) Application number: 14723852.1
(22) Date of filing: 06.05.2014
(51) Int. Cl.: G21B 3/00

(54) **A PROCESS FOR INDUCING NUCLEAR FUSION REACTIONS**
VERFAHREN ZUR ERZEUGUNG VON KERNFUSIONSREAKTIONEN
PROCÉDÉ DE GENERATION DE REACTIONS DE FUSION NUCLÉAIRE

(30) Priority: 06.05.2013 GB 201308127
(43) Date of publication of application: 16.03.2016
(73) Proprietor: Wayte, Richard Charles, Ascot, Berkshire SL5 8EE (GB)
(72) Inventor: Wayte, Richard Charles, Ascot, Berkshire SL5 8EE (GB)
(74) Representative: Boult Wade Tennant
(86) International application number: PCT/GB2014/051386
(87) International publication number: WO 2014/181097

(56) References cited:
- US-A1- 2007 263 758
- BEL'KOV ET AL.: "Application of beryllium deuteride as a material for laser X-ray target shells", QUANTUM ELECTRONICS, vol. 32, no. 1, 2002, pages 27-30, XP002727247, DOI: 10.1070/QE2002v032n01ABEH002120 Retrieved from the Internet: URL:http://www.turpion.org/php/full/getFT. phtml/qe_32_27.pdf?journal_id=qe&paper_id= 2120&agree=on&tpdfn=qe_32_27&x=75&y=1>
- HAIPING W ET AL: "The synthesis of LiBH4 films under low hydrogen pressure at ambient temperature", MATERIALS LETTERS, NORTH HOLLAND PUBLISHING COMPANY. AMSTERDAM, NL, vol. 64, no. 3, 15 February 2010 (2010-02-15), pages 320-322, XP026810583, ISSN: 0167-577X [retrieved on 2009-11-05]
- Newton et al.: "A Moderated Target Sub-Assembly Design for Minor Actinide Transmutation", , 2003, pages 1-10, XP002727248, Retrieved from the Internet: URL:http://www.answerssoftwareservice.com/ resource/pdfs/GLOBAL_Paper_2003.pdf [retrieved on 2014-07-15]
- YVON K ET AL: "Magnesium based ternary metal hydrides containing alkali and alkaline-earth elements", JOURNAL OF ALLOYS AND COMPOUNDS, ELSEVIER SEQUOIA, LAUSANNE, CH, vol. 425, no. 1-2, 30 November 2006 (2006-11-30), pages 101-108, XP028000211, ISSN: 0925-8388, DOI: 10.1016/J.JALLCOM.2006.01.049 [retrieved on 2006-11-30]
- WU ET AL: "Structure and vibrational spectra of calcium hydride and deuteride", JOURNAL OF ALLOYS AND COMPOUNDS, ELSEVIER SEQUOIA, LAUSANNE, CH, vol. 436, no. 1-2, 10 April 2007 (2007-04-10), pages 51-55, XP022025150, ISSN: 0925-8388, DOI: 10.1016/J.JALLCOM.2006.07.042
- MERKULIEV, ET AL.: "Novel Technologies in Microfusion", AIP CONFERENCE PROCEEDINGS, vol. 849, 2006, pages 363-367, DOI: 10.1063/1.2337227
- BORISENKO ET AL.: 'Laser targets and experiments for the sakeof science and energy in the 22nd century' JOURNAL OF PHYSICS vol. 75, no. 6, December 2010, pages 1115 - 1127, XP019923819 Indian Academy of Sciences Retrieved from the Internet: <URL:http://www.ias.ac.in/article/fulltext/ pram/075/06/1115-1127> [retrieved on 2017-04-07] & US 2011/044416 A1 (GALINDO CABELLO JOSE IGNACIO [AR] ET AL) 24 February 2011 (2011-02-24)

## Description

This invention relates to making nuclear fusion and the ways in which it may be harnessed to generate usable power.

### Background

At the highest level of government in many countries, it is understood that efforts must continue to develop nuclear fusion as an energy source, (see, for example, www.parliament.the-stationery-office.co.uk/pa/cm200809/cmselect/cmdius/ 50/5002.htm). Consequently, Research Councils UK (among others) has established an energy programme for urgent research into fusion, (see, www.rcuk.ac.uk /documents/energy/20-yearvision.pdf).

Nuclear fusion is the process whereby two light nuclei bind together to form a heavier nucleus, with energy release due to some conversion of mass to energy. Harnessing fusion on earth, via deuterium to helium reactions would be environmentally friendly, safe, clean, and effectively limitless. In the UK, one such process involves confining hot plasma inside a tokomak reactor like JET or ITER, (see www.ccfe.ac.uk and www.iter.org). Alternatively in the USA, inertial confinement fusion is being tried wherein a pellet of deuterium and tritium fuel is compressed strongly by lasers, or particle beams, or z-pinch wires, (see, http://dorland.pp.ph.ic.ac.uk/magpie/research/PWMAY00.pdf, www.hiper-laser.org and https://lasers.llnl.gov/programs/ife). World-wide, other experimenters persistently try to produce cold fusion in electrolytic cells (see: www.iccf17.org/sub16.php, lenr-canr.org and www.iscmns.org). All these techniques are now being pursued vigorously in many different laboratories, in an effort to prevent a global warming catastrophe and the riotous consumption of remaining oil and gas supplies. Unfortunately, progress has been depressingly slow and increasingly expensive, with questions arising about the timescale for success.

In "Application of Beryllium Deuteride as a Material for Laser X-ray Target Shells", by S.A. Bel'kov et al, there is discussed the target ignition under the conditions corresponding to the National Ignition Facility (USA), where Beryllium deuteride BeD₂ with a small admixture of copper was considered as the target shell material.

In "Novel Technologies in Microfusion", by Merkuliev, Yu. A. et al, there is discussed a method of foaming for spherical shells made from metastable hydrides such as BeD₂ or ND₃BD₃.

In "Laser Targets and Experiments for the Sake of Science and Energy in the 22^{nd} Century", by N G Borisenko and Yu. A. Merkuliev, there is discussed laser fusion for energy and hybride schemes with laser application, and results concerning target fabrication.

In United States Patent Application Publication US 2011/0044416 A1, there is discussed a process for controlled nuclear fusion of deuterium atoms that takes place inside a combustion chamber after the combustion of a gaseous fuel that comprises deuterium atoms in the presence of an oxidizing gas and a gaseous catalyst, under positive pressure.

### Summary of the Invention

This invention relates to a process for making nuclear fusion occur in a prescribed solid state fusion-fuel when subjected to compression.

In one aspect, the invention provides a process for making nuclear fusion energy by compressing a fusion-fuel comprising a catalytic material mixed with a deuteride of an alkaline earth metal or alkali metal.

In particular embodiments of the invention, the deuteride may be of an alkaline earth metal, for example calcium.

The catalytic material comprises a mixture or a compound containing phosphorus (in particular red phosphorus) and a transition metal from Period 4 or Period 5 of the Periodic table.

In particular embodiments, the transition metal is from Period 4 of the Periodic table - for example, manganese.

The catalytic material may advantageously comprise powders of red phosphorus and the chosen transition metal(s). The fusion fuel may be formed, for example, from a mixture of powders of red phosphorus, the chosen transition metal(s) and the chosen deuteride. The particle sizes of the respective powders may, for example, be in the range 20 to 75 µm. The weight proportions of the ingredients of the fusion fuel may, for example, be substantially equal to each other; however, they may vary within reasonably wide bands (for example up to 50% or more). Thus, for example, weight ratios of deuteride : red phosphorus : transition metal may vary from 1:1:1 to 1:1:2, 1:2:1, 2:1:1, 2:1:2 and all points in between and potentially beyond.

If desired, the fusion-fuel may comprise a mixture of deuteride(s) and hydride(s), the deuteride(s) providing the primary fusionable fuel source and the hydride(s) a secondary, milder, source of fusionable material. This may be of benefit, for example, in moderating the energy generation in the fusion reaction.

An advantage of this invention is that the fusion-fuel is comparatively cheap to produce and the technology for compression is already available. Any suitable compression method may be employed. For example, compression may be accomplished by using incident beams of laser radiation, electrons, ions, atoms, or high velocity particles. As an alternative, compression may be accomplished by using a mechanical force, a shockwave, a grinding action, or a mill. As a further alternative, compression may be accomplished by propelling a pellet or a capsule of the fusion-fuel against an object (such as a wall or another pellet of fusion-fuel). As a yet further alternative, compression may be accomplished by using a Z-pinch effect. The person skilled in the art will appreciate that the precise manner of supplying compression is not of primary importance to the operation of the invention; any suitable method for providing a sufficient degree of compressive force may in principle be applied.

In some embodiments of process according to the invention, it may be advantageous to heat the fusion-fuel in addition to applying compressive force. Such heating may be accomplished by any suitable means, for example by using an external heat source, a hot filament, an electric spark discharge, or an incident beam of laser radiation, electrons, ions, atoms, or high velocity particles. Suitable alternative heating means will suggest themselves to those skilled in the art.

It is well known in the art that the predominant product of the fusion of hydrogen/deuterium is helium. Helium has a number of uses due to its inertness and low density, and it is widely used in cryostats. However, naturally occurring reserves of helium are rapidly being depleted. A further facet of the invention therefore resides in the collection of the helium gas created by the fusion process, for industrial or commercial use.

Reproducible fusion has been demonstrated experimentally in embodiments of the process, as described below. A number of additional embodiments are also described below for the purpose of using the fusion process of the invention for commercially viable energy generation. Alternative modes of commercial energy generation will suggest themselves to those skilled in the art.

The invention is hereinafter described in further detail by way of example only, with reference to the accompanying drawings.

### Brief Description of the Drawings

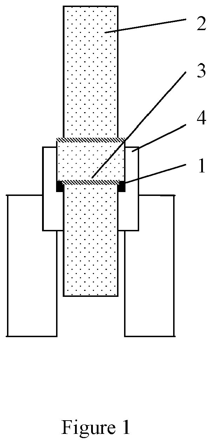

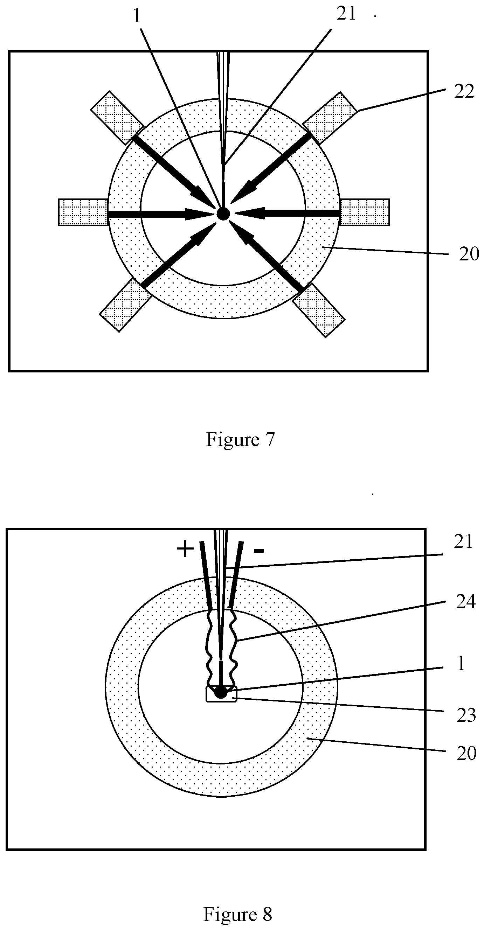

The drawings illustrate six embodiments of apparatus for carrying out the method of the invention, all of which have been tested successfully by the Applicant. These are shown in Figures 1 to 6, which will be described in more detail below. Also described below are various feasible embodiments of apparatus for commercial fusion energy generation using the method of the invention, which are shown in Figures 7 to 10.

### Detailed description

For demonstrating the reality of solid state nuclear fusion, the following procedures were performed many times, resulting in strong reactions which could not be attributed to normal chemical exothermic processes.

The most successful experiments employed fusionable material, calcium deuteride, which was produced by heating pieces of calcium in an atmosphere of deuterium in a silica flask. This was ground with mortar and pestle, and then mixed with similar weights of a catalytic material comprising red phosphorus powder and manganese powder, to yield the basic prescribed fusion-fuel.

It is anticipated that other alkaline earth or alkali metals would work in place of calcium, because their primary function would be to fix the deuterium. Indeed, further experiments using the deuterides of magnesium, strontium, barium, lithium and sodium have provided satisfactory results. Similarly, transition elements in Periods 4 and 5 have wide-ranging catalytic properties and are likely to work in place of manganese to an acceptable degree (see www.sigmaaldrich.com/chemistry/chemistry-products.html?TablePage=16257685). Satisfactory results have been achieved using fusion fuels comprising mixtures of powders of calcium deuteride, red phosphorus and each one of the following: scandium, titanium, vanadium, chromium, manganese, iron, cobalt, nickel, copper, zinc, yttrium, zirconium, niobium, molybdenum and cadmium. The person skilled in the art will be able to select a suitable transition metal for use in any particular set of circumstances, in order to optimise the method for either energy generation or helium production.

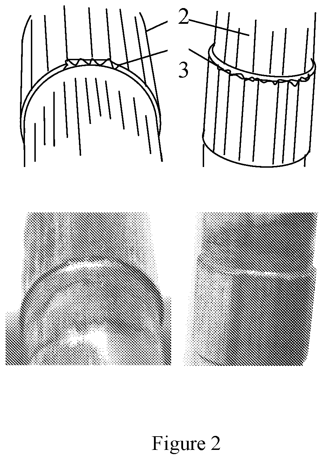

Figure 1 shows one successful embodiment of the process which produced the claimed fusion, consisting of a case-hardened steel bearing rod 2 with shoulder 3, to be pushed through a shaped steel sleeve 4 containing the said fusion-fuel 1. (Figure scale is approximately 1:1). The fusion-fuel was put around a case-hardened steel bearing rod with a shoulder to compress the fusion-fuel as it was pushed through a shaped sleeve. A press-fit between rod and sleeve was specified to contain the fusion-fuel and gases. Upon applying several tons of force, shear occurred in the compacted fusion-fuel under the shoulder and ignited fusion which broke many pieces off the rod shoulder and even melted the nearby surface in places. This allowed the generated gas pressure and fusion process to subside without progressing to a runaway situation. Figure 2 shows line drawings and photographs of two typical rods 2 with broken shoulders 3, which indicate that extreme pressure pulses must have been generated to do such damage on bearing steel. The originally shiny steel surface was scorched and eroded all around. After extracting the rod from the steel sleeve, inspection of the sleeve interior revealed a melted burnt appearance.

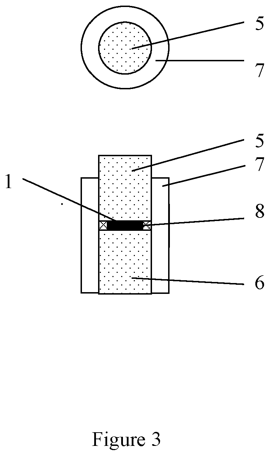

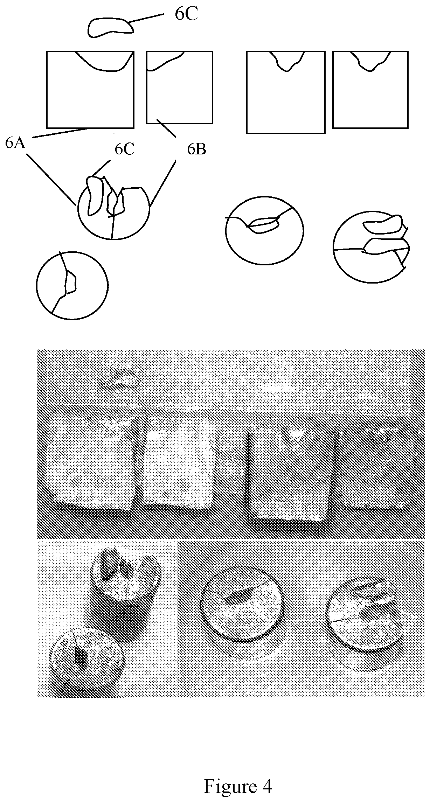

Figure 3 shows another successful embodiment of the fusion process in which the said fusion-fuel 1 was put in a compression cell consisting of two hardened steel roller bearings 5, 6, in a steel sleeve 7 with a solder seal 8 to contain the fusion-fuel and gases. (Figure 3 scale is approximately 1:1). It was subjected to a pressure of 25 tons per square centimetre in a press, to form a solid pellet of fusion-fuel. The force was then removed and a steel wedge placed under the cell. As pressure was resumed, some shear occurred within the fusion-fuel pellet, and ignition of fusion occurred at a localised hot-spot in the shear-plane within the pressurised environment. Figure 4 illustrates line drawing representations and photographs of two separate examples, wherein the fusion gas pressure was great enough over a surface area of 1mm x 4mm to create a cutting wedge of steel 6C within the lower bearing surface, which then cleaved that bearing into pieces 6A, 6B. The wedge shown 6C was retrieved in one case. In many cases, the bearings were shattered and fusion ceased as the gases were able to escape and reduce pressure.

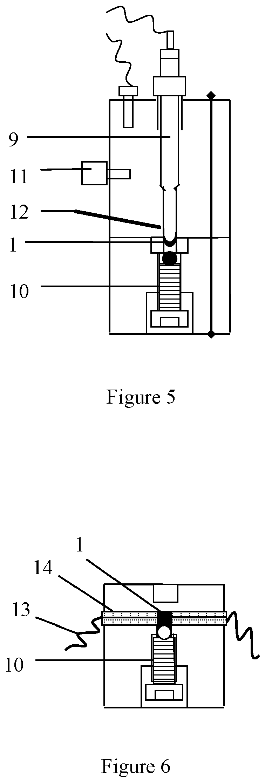

Figure 5 shows an embodiment for producing persistent fusion wherein the said fusion-fuel 1 was heated in a cell by a diesel-engine glow-plug 9, while being compressed by a screw 10 and monitored by an accelerometer 11 and thermocouple 12.

Figure 6 shows an embodiment for producing fusion using a direct hot wire effect, wherein the fusion-fuel 1 was compressed by screw 10 and heated by a wire 13 carried by ceramic-metal seals 14.

Figure 7 shows an embodiment to produce fusion for commercial energy generation wherein the said fusion-fuel pellet 1 is suspended from a support 21 and compressed by one or more laser beams 22 or particle beams 22, contained overall within a heat exchanger 20 to produce steam for electricity generation

Figure 8 shows an embodiment to produce fusion for commercial energy generation, wherein the said fusion-fuel 1 is contained within a Z-pinch cell 23, suspended from a support 21, and compressed by firing the cell via conductors 24 within an overall heat exchanger 20 to produce steam for electricity generation.

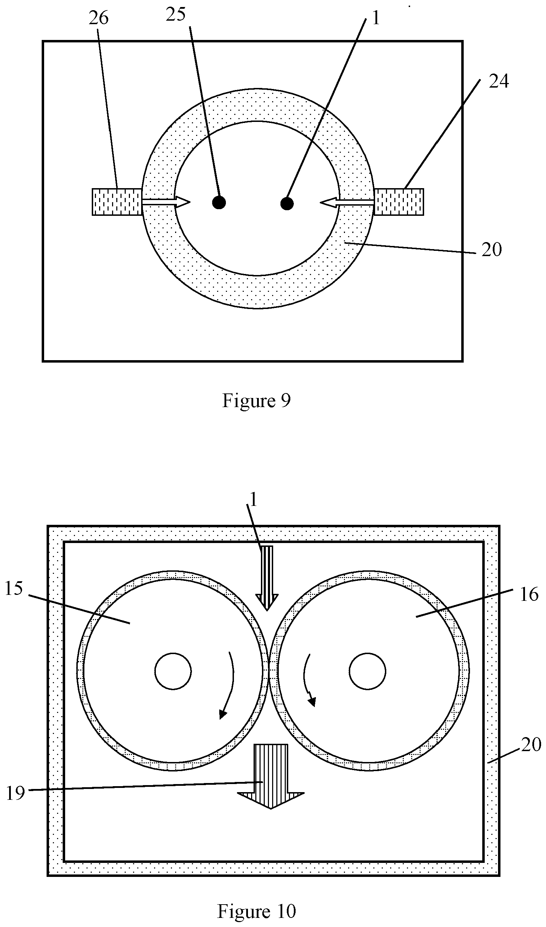

Figure 9 shows an embodiment to produce fusion for commercial energy generation, wherein the said fusion-fuel 1 is encapsulated and propelled by a system 24, so as to collide with another capsule 25 from system 26 or a stationary capsule, in order to cause fusion within an overall heat exchanger 20 to produce steam for electricity generation.

Figure 10 shows an embodiment of a rolling compression/grinding process to produce fusion energy, wherein the fusion-fuel 1 is compressed between a rotating driven roller 15 and a slave roller 16 to cause fusion such that the resulting hot gases 19 produce force on adjacent turbine blades, to enhance roller rotation and are contained by an overall closed heat exchanger 20 which maintains an inert environment and produces steam for electricity generation.

Having disclosed the general principle by which nuclear fusion may be achieved, the person skilled in the art will understand how to put that principle into practice in order to generate power and/or to produce helium. The embodiments described above are merely examples and are not intended to restrict the scope of the invention in any way. The scope of the invention is, on the contrary, defined by the following claims.

## Claims

1. A process for making nuclear fusion energy by compressing a fusion-fuel, the process **characterised in that** the fusion-fuel comprises a catalytic material mixed with a deuteride of an alkaline earth metal or alkali metal, wherein said catalytic material comprises a mixture or a compound containing red phosphorus (P) and a transition metal from Period 4 or Period 5 of the Periodic table.

2. The process of Claim 1 wherein said deuteride is of an alkaline earth metal.

3. The process of Claim 2 wherein said deuteride is of calcium (Ca).

4. The process of Claim 1 wherein said transition metal is from Period 4 of the Periodic table.

5. The process of Claim 4 wherein said transition metal is manganese (Mn).

6. The process according to any preceding Claim, wherein the fusion fuel is composed of a mixture of powders of the deuteride and catalytic material.

7. The process of any preceding Claim, wherein said compressing is accomplished by using a number of incident beams of laser radiation, or electrons, or ions, or atoms, or high velocity particles.

8. The process of any of Claims 1 to 6 wherein said compressing is accomplished by using a mechanical force, or a Shockwave, or a grinding action, or a mill.

9. The process of any of Claims 1 to 6 wherein said compressing is accomplished by propelling a pellet or a capsule of said fusion-fuel against an object.

10. The process of any of Claims 1 to 6 wherein said compressing is accomplished by using a Z-pinch effect.

11. The process of any preceding Claim further comprising heating accomplished by using an external heat source, or a hot filament, or an electric spark discharge, or an incident beam as claimed in Claim 7.

12. The process of any preceding Claim wherein helium gas created by the fusion process is collected as a commercial product.

## Patentansprüche

1. Verfahren zur Herstellung von Kernfusionsenergie durch Verdichten eines Fusionsbrennstoffs, wobei das Verfahren **dadurch gekennzeichnet ist, dass** der Fusionsbrennstoff ein mit einem Deuterid eines Erdalkalimetalls oder Alkalimetalls gemischtes katalytisches Material umfasst, wobei das katalytische Material ein Gemisch oder eine Verbindung umfasst, die roten Phosphor (P) und ein Übergangsmetall der Gruppe 4 oder der Gruppe 5 des Periodensystems enthält.

2. Verfahren nach Anspruch 1, wobei das Deuterid ein Erdalkalimetall ist.

3. Verfahren nach Anspruch 2, wobei das Deuterid Calcium (Ca) ist.

4. Verfahren nach Anspruch 1, wobei das Übergangsmetall der Gruppe 4 des Periodensystems entstammt.

5. Verfahren nach Anspruch 4, wobei das Übergangsmetall Mangan (Mn) ist.

6. Verfahren nach einem vorangehenden Anspruch, wobei der Fusionsbrennstoff aus einem Gemisch von Pulvern des Deuterids und des katalytischen Materials besteht.

7. Verfahren nach einem vorangehenden Anspruch, wobei das Verdichten unter Verwendung einer Anzahl von einfallenden Strahlen von Laserstrahlung oder Elektronen oder Ionen oder Atomen oder Hochgeschwindigkeitsteilchen erreicht wird.

8. Verfahren nach einem der Ansprüche 1 bis 6, wobei das Verdichten unter Verwendung einer mechanischen Kraft, einer Schockwelle oder einer Reibwirkung oder eines Walzwerks erreicht wird.

9. Verfahren nach einem der Ansprüche 1 bis 6, wobei das Verdichten durch Schleudern eines Pellets oder einer Kapsel des Fusionsbrennstoffs gegen ein Objekt erreicht wird.

10. Verfahren nach einem der Ansprüche 1 bis 6, wobei das Verdichten unter Verwendung einer Z-Pinch-Wirkung erreicht wird.

11. Verfahren nach einem vorangehenden Anspruch, weiterhin umfassend Erwärmen, das unter Verwendung einer externen Wärmequelle oder eines heißen Drahts oder einer elektrischen Funkenentladung oder eines einfallenden Strahls nach Anspruch 7 erreicht wird.

12. Verfahren nach einem vorangehenden Anspruch, wobei durch das Fusionsverfahren erzeugtes Heliumgas als kommerzielles Produkt gesammelt wird.

## Revendications

1. Procédé de production d'énergie de fusion nucléaire par compression d'un combustible de fusion, le procédé étant **caractérisé en ce que** le combustible de fusion comprend un matériau catalytique mélangé à un deutérure d'un métal alcalino-terreux ou d'un métal alcalin, où ledit matériau catalytique comprend un mélange ou un composé contenant du phosphore rouge (P) et un métal de transition de la Période 4 ou de la Période 5 du Tableau Périodique.

2. Procédé de la revendication 1, dans lequel ledit deutérure est un deutérure d'un métal alcalino-terreux.

3. Procédé de la revendication 2, dans lequel ledit deutérure est un deutérure de calcium (Ca).

4. Procédé de la revendication 1, dans lequel ledit métal de transition est de la Période 4 du Tableau Périodique.

5. Procédé de la revendication 4, dans lequel ledit métal de transition est le manganèse (Mn).

6. Procédé selon l'une des revendications précédentes, dans lequel le combustible de fusion est composé d'un mélange de poudres du deutérure et de matériau catalytique.

7. Procédé de l'une des revendications précédentes, dans lequel ladite compression est accomplie en utilisant un certain nombre de faisceaux incidents de rayonnement laser, ou d'électrons, ou d'ions, ou d'atomes, ou de particules à grande vitesse.

8. Procédé de l'une des revendications 1 à 6, dans lequel ladite compression est accomplie en utilisant une force mécanique, ou une onde de choc, ou une action de broyage, ou un broyeur.

9. Procédé de l'une des revendications 1 à 6, dans lequel ladite compression est accomplie en propulsant une pastille ou une capsule dudit combustible de fusion contre un objet.

10. Procédé de l'une des revendications 1 à 6, dans lequel ladite compression est accomplie en utilisant un effet de striction longitudinale.

11. Procédé de l'une des revendications précédentes, comprenant en outre un chauffage accompli en utilisant une source de chaleur externe, ou un filament chaud, ou une décharge électrique par étincelles, ou un faisceau incident tel que revendiqué dans la revendication 7.

12. Procédé de l'une des revendications précédentes, dans lequel le gaz hélium créé par le procédé de fusion est recueilli en tant que produit commercial.
